# EUROPEAN PATENT SPECIFICATION

(11) **EP 1 964 744 B1**
(45) Date of publication and mention of the grant of the patent: **21.09.2011**
(21) Application number: 08250658.5
(22) Date of filing: 27.02.2008
(51) Int. Cl.: B60W 10/06, B60W 10/08, B60W 30/18, B60K 6/365, B60K 6/445

(54) **Control system and control method of vehicular drive system**
Steuersystem und Steuerverfahren für ein Fahrzeugantriebssystem
Système de contrôle et procédé de contrôle pour système de commande véhiculaire

(30) Priority: 27.02.2007 JP 2007046653
(43) Date of publication of application: 03.09.2008
(73) Proprietor: TOYOTA JIDOSHA KABUSHIKI KAISHA, Aichi-ken, 471-8571 (JP)
(72) Inventor: Shibata, Hiroyuki, Toyota-shi Aichi-Ken 471-8571 (JP); Matsubara, Tooru, Toyota-shi Aichi-Ken 471-8571 (JP); Tabata, Atsushi, Toyota-shi Aichi-Ken 471-8571 (JP)
(74) Representative: Albutt, Anthony John

(56) References cited:
- WO-A1-2006/051998
- DE-A1- 10 126 348
- JP-A- 2006 118 667
- US-A1- 2006 166 784

## Description

### BACKGROUND OF THE INVENTION

### 1. Field of the Invention

This invention relates to a control system and a control method of a vehicular drive system which includes an engine, an electric differential unit in which the operating state of a first electric motor coupled in a power transmittable manner to a rotary element of a differential mechanism is controlled so that a differential state between the rotational speed of an input shaft coupled in a power transmittable manner to the engine and the rotational speed of an output shaft is controlled, and a shifting unit and a second electric motor coupled to a power transmission path from the electric differential unit to driving wheels. In particular, the invention is concerned with reduction of shift shock that occurs upon coast downshift during regenerative running of the vehicle.

### 2. Description of Related Art

A control system of a vehicular drive system is known which includes an engine, an electric differential unit in which the operating state of a first electric motor coupled in a power transmittable manner to a rotary element of a differential mechanism is controlled so that a differential state or difference between the rotational speed of an input shaft coupled to the engine and the rotational speed of an output shaft is controlled, and a shifting unit and a second electric motor coupled to a power transmission path from the electric differential unit to driving wheels, as disclosed in, for example, Japanese Patent Application Publication No. 2006-118667 (JP-A-2006-118667). In the control system of the vehicular drive system, a regeneration efficiency optimizing means controls the speed ratio of an automatic transmission during coasting so as to achieve the optimum regeneration efficiency, for an improvement in the fuel economy

When the automatic transmission is shifted down during coasting of the vehicle, i.e., when a coast downshift takes place, the rotational speed of the output shaft of the differential mechanism is raised to a speed determined based on the speed ratio of the gear position to which the transmission is shifted down and the vehicle speed. Since the amount of depression (or stroke) of the accelerator pedal is zero during coasting, and the rotational speed of the output shaft of the differential mechanism cannot be raised from the side of the engine, a selected one or ones of friction devices of the shifting unit is/are forced to be engaged or released so as to raise the rotational speed of the output shaft and complete the shifting action. Namely, during coast downshifting, the speed of rotation from the driving-wheel side is changed (increased) via the shifting unit through engagement of the friction device(s), and the rotation having the increased speed is transmitted to the output shaft of the differential mechanism, so that the rotational speed of the output shaft is raised. If regeneration is performed by the second electric motor at this time, for example, the amount of work required for raising the rotational speed of the output shaft is increased by an amount corresponding to the regeneration torque of the second motor, in other words, the inertia force of an input system of the shifting unit including the output shaft of the differential unit appears to be increased, whereby shift shock that occurs upon shifting may be increased.

### SUMMARY OF THE INVENTION

It is an object of the invention to provide a control system of a vehicular drive system which includes an engine, an electric differential unit in which the operating state of a first electric motor coupled in a power transmittable manner to a rotary element of a differential mechanism is controlled so that a differential state between the rotational speed of an input shaft coupled in a power transmittable manner to the engine and the rotational speed of an output shaft is controlled, and a shifting unit and a second electric motor coupled to a power transmission path from the electric differential unit to driving wheels, wherein shift shock that occurs upon a coast downshift during regenerative running can be reduced.

A first aspect of the invention relates to a control system of a vehicular drive system including an engine, an electric differential unit in which operating state of first electric motor coupled in a power transmittable manner to rotary elements of a differential mechanism is controlled so that a differential state between a rotational speed of an input shaft coupled in a power transmittable manner to the engine and a rotational speed of an output shaft is controlled, and a second electric motor and a shifting unit that are coupled to a power transmission path from the electric differential unit to a driving wheel. The control system includes a regeneration torque reducing means for reducing regeneration torque of the second electric motor when the shifting unit is in an inertia phase during coast downshifting.

With the above arrangement, the regeneration torque of the second electric motor is reduced during the inertia phase, so that the amount of work required for producing the regeneration torque of the second motor is reduced, and the rotational speed of the output shaft of the differential mechanism can be easily raised. Consequently, shift shock that occurs upon shifting is favorably reduced.

The regeneration torque reducing means may make the amount of reduction of the regeneration torque variable depending on a selected shift mode of the shifting unit.

With the above arrangement, the regeneration torque is favorably reduced depending on the selected shift mode, and shift shock can be suitably controlled in accordance with the selected shift mode.

In the control system as described above, a shifting device may be provided which is manually operated by the driver to permit selection of a gear position of the shifting unit in a manual shift mode, and the regeneration torque reducing means may decrease the amount of reduction of the regeneration torque during coast downshifting in the manual shift mode, as compared with that during coast downshifting in an automatic shift mode in which the shifting unit is automatically shifted down.

With the above arrangement, shift shock is more likely to occur during coast downshifting in the manual shift mode, rather than in the automatic shift mode. In this connection, it is more desirable for the driver to feel a sense of shifting, rather than avoiding shift shock, when shifting is caused by a manual operation of the driver. Therefore, the amount of reduction of the regeneration torque is decreased in the manual shift mode so as to allow shift shock to occur and enable the driver to get a sense of shifting as desired.

The regeneration torque reducing means may increase the amount of reduction of the regeneration torque as a rate of change of the rotational speed of the output shaft of the electric differential unit increases.

Since the amount of reduction of the regeneration torque is increased as the rate of change of the rotational speed of the output shaft of the differential mechanism is larger, namely, as the rotational speed of the output shaft changes more rapidly, the rotational speed of the output shaft of the differential mechanism can be easily changed, and shift shock is reduced.

The regeneration torque reducing means may gradually increase the regeneration torque in a terminal period of shifting, so as to resume a condition prior to reduction of the regeneration torque.

With the above arrangement, an abrupt or rapid change in the torque that would otherwise occur at the end of shifting can be prevented.

The regeneration torque reducing means may increase the amount of reduction of the regeneration torque in accordance with the amount of change of the rotational speed of the engine.

With the above arrangement, when the shifting unit is manually shifted down, for example, the engine speed is rapidly raised, and the increase of the engine speed makes it possible for the driver to feel an enhanced sense of deceleration.

The operating states of the first and second electric motors may be controlled so that the electric differential unit operates as a continuously variable transmission.

In the above case, the electric differential unit and the shifting unit constitute a continuously variable transmission, which can smoothly change driving torque. In this connection, the electric differential unit may operate as an electric continuously variable transmission capable of continuously changing the speed ratio, and may also operate as a stepped shifting type transmission capable of changing the speed ratio in steps.

The shifting unit may be an automatic transmission having a plurality of gear positions.

For example, the electric differential unit that functions as an electric CVT (continuously variable transmission) and the automatic transmission having a plurality of gear positions constitute a continuously variable transmission, which can smoothly change driving torque. Where the speed ratio of the electric differential unit is controlled to be constant, the electric differential unit and the stepped shifting type automatic transmission constitute a system equivalent to a stepped shifting transmission whose speed ratio is changed in steps. In this case, the total speed ratio of the vehicular drive system is changed in steps, and desired driving torque can be quickly obtained.

Preferably, the differential mechanism is a planetary gear set having three rotary elements, i.e., a first element coupled to the input shaft and the engine, a second element coupled to the first electric motor, and a third element coupled to the output shaft. The first element is a carrier of the planetary gear set, and the second element is a sun gear of the planetary gear set, while the third element is a ring gear of the planetary gear set. The differential mechanism thus constructed has a relatively small dimension as measured in the axial direction. Also, the differential mechanism can be simply constructed or provided by a single planetary gear set.

Preferably, the planetary gear set is a single-pinion type planetary gear set. In this case, the axial dimension of the differential mechanism is reduced. Also, the differential mechanism can be simply constructed or provided by one single-pinion type planetary gear set.

Preferably, the total speed ratio of the vehicular drive system is formed based on the speed ratio (gear ratio) of the shifting unit and the speed ratio of the electric differential unit. Thus, a wide range of driving force can be obtained by utilizing the speed ratio of the shifting unit.

Preferably, the shifting unit is a stepped shifting type automatic transmission having a plurality of gear positions. In this case, the electric differential unit that functions as, for example, an electric CVT (continuously variable transmission) and the stepped shifting type automatic transmission constitute a continuously variable transmission, which is able to smoothly change driving torque. In a condition where the speed ratio of the electric differential unit is controlled to be constant, the electric differential unit and the stepped shifting type automatic transmission constitute a system equivalent to a stepped shifting transmission whose speed ratio is changed in steps. In this case, the total speed ratio of the vehicular drive system can be changed in steps, and desired driving torque can be quickly obtained.

A second aspect of the present invention relates to a method of controlling a vehicular drive system. The method has the steps of determining whether the drive system is being shifted down during coasting of the vehicle; determining whether the vehicle is in a regenerative running condition; determining whether a shifting condition is an inertia phase; and reducing regeneration torque of an electric motor of an electric differential unit provided in a power transmission path from an engine to a driving wheel when it is determined that coast downshift is carried out, the vehicle is in the regenerative running condition, and the shifting condition is the inertia phase. The electric motor is connected to an output shaft of the electric differential unit.

### BRIEF DESCRIPTION OF THE DRAWINGS

The foregoing and further objects, features and advantages of the invention will become apparent from the following description of exemplary embodiments of the invention with reference to the accompanying drawings, wherein like numerals are used to represent like elements and wherein:
FIG. 1 is a skeleton diagram useful for explaining the construction of a drive system of a hybrid vehicle as one embodiment of the invention;
FIG. 2 is an operation table useful for explaining the combinations of operations of hydraulic friction devices used for shifting of the drive system of FIG. 1;
FIG. 3 is an alignment chart useful for explaining the relative rotational speeds of respective rotary elements of the drive system of FIG. 1 when placed in each gear position;
FIG. 4 is a view useful for explaining input and output signals of an electronic control unit provided in the drive system of FIG. 1;
FIG. 5 is a circuit diagram showing linear solenoid valves that control the operations of respective hydraulic actuators of clutches C and brakes B in a hydraulic control circuit;
FIG. 6 is a view showing one example of shifting device having a shift lever that is operated so as to select one from two or more shift positions;
FIG. 7 is a function block diagram useful for explaining principal control functions of the electronic control unit of FIG. 4;
FIG. 8 is a view showing one example of shift map used in shift control of the drive system, and one example of driving-force source map used in switching control for switching the source of driving force between engine running and motor running;
FIG. 9 shows one example of fuel economy map in which the broken line indicates the optimum fuel economy curve of the engine;
FIG. 10 is a time chart useful for explaining a control operation for reducing regeneration torque;
FIG. 11 is a view showing the relationship between changes in the rotational speed of a power transmitting member and the amount of reduction of regeneration torque; and
FIG. 12 is a flowchart useful for explaining a control operation of the electronic control unit of FIG. 4, namely, downshift control performed during regenerative running of the vehicle.

### DETAILED DESCRIPTION OF EMBODIMENTS

In the following, one exemplary embodiment of the invention will be described in detail with reference to the drawings.

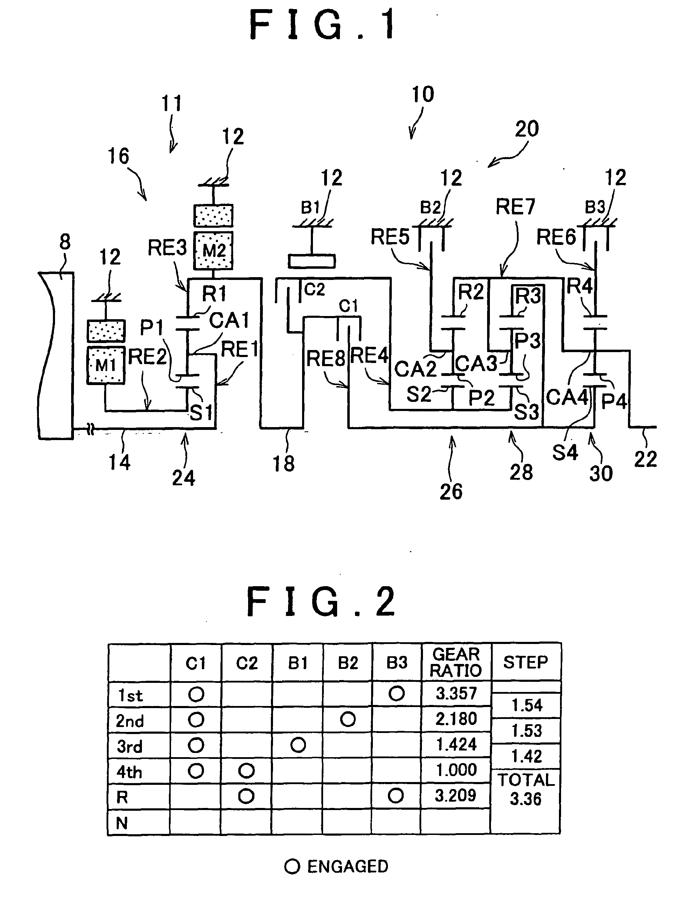

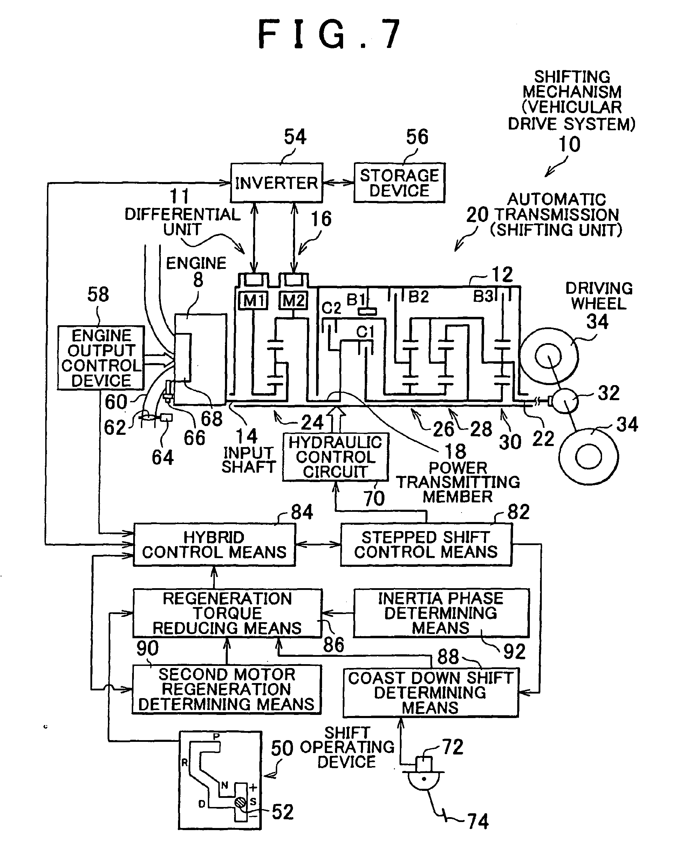

FIG. 1 is a skeleton diagram useful for explaining a shifting mechanism 10 that provides a part of a drive system of a hybrid vehicle. In FIG. 1, the shifting mechanism 10 includes an input shaft 14 as an input rotary member, a differential unit 11 that may operate as a continuously variable transmission, an automatic transmission 20 as a power transmitting unit, and an output shaft 22 as an output rotary member, which are arranged in series on a common axis in a transmission case 12 (which will be simply called "case 12") as a non-rotating or stationary member attached to the vehicle body. The differential unit 11 is directly coupled to the input shaft 14, or indirectly connected to the input shaft 14 via a pulsation absorbing damper (vibration damping device) (not shown). The automatic transmission 20 is coupled to the differential unit 11 via a power transmitting member (transmission shaft) 18 on a power transmission path between the differential unit 11 and driving wheels 34 (see FIG. 7). The output shaft 22 is coupled to the automatic transmission 20. The shifting mechanism 10 is favorably used in, for example, a FR (front-engine, rear drive) type vehicle in which the engine is longitudinally mounted, and is disposed between an engine 8 as an internal combustion engine, such as a gasoline engine or a diesel engine, and a pair of driving wheels 34. The engine 8, which serves as a driving power source for running the vehicle, is directly coupled to the input shaft 14, or directly coupled to the input shaft 14 via a pulsation absorbing damper (not shown). The shifting mechanism 10 is operable to transmit power from the engine 8 to the pair of driving wheels 34 via a differential gear unit (final speed reduction gear) 32 (see FIG. 7) and a pair of axles, which provide a part of the power transmission path, and so forth. The differential unit 11 of this embodiment may be regarded as the above-mentioned electric differential unit of the invention, and the automatic transmission 20 may be regarded as the above-mentioned shifting unit of the invention.

In the shifting mechanism 10 of this embodiment, the engine 8 and the differential unit 11 are directly coupled to each other, which means that the engine 8 and the differential unit 11 are coupled to each other without interposing a hydraulic power transmitting device, such as a torque converter or a fluid coupling, therebetween. For example, coupling via the above-mentioned pulsation absorbing damper, or the like, is regarded as one form of direct coupling. The shifting mechanism 10 is constructed symmetrically with respect to the axis thereof, and therefore the lower half of the mechanism 10 is not illustrated in the skeleton diagram of FIG. 1.

The differential unit 11 includes a first electric motor M1, a power distributing mechanism 16 as a differential mechanism, and a second electric motor M2 operatively coupled to the power transmitting member 18 so that the second motor M2 and transmitting member 18 rotate as a unit. The power distributing mechanism 16, which is a mechanical mechanism, is operable to mechanically distribute the power of the engine 8 applied to the input shaft 14 between the first motor M1 and the power transmitting member 18. The first motor M1 and second motor M2 of this embodiment are so-called motor generators having the power generating function. In this embodiment, the power distributing mechanism 16 may be regarded as the above-mentioned differential mechanism of the invention, and the power transmitting member 18 may be regarded as the output shaft of the differential mechanism of the invention.

The power distributing mechanism 16 consists principally of a single pinion type first planetary gear set 24 having a gear ratio ρ1 of, for example, about 0.418. The first planetary gear set 24 includes a first sun gear S1, a first planet gear P1, a first carrier CA1 that rotatably supports the first planet gear P1, and a first ring gear R1 as rotary elements (elements). The first carrier CA1 supports the first planet gear P1 such that the planet gear P1 can rotate about its own axis and about the axis of the planetary gear set 24. The first ring gear R1 engages with the first sun gear S1 via the first planet gear P1. The above-mentioned gear ratio ρ1 is expressed as ZS1/ZR1, where ZS1 is the number of teeth of the sun gear S1, and ZR1 is the number of teeth of the first ring gear R1.

In the power distributing mechanism 16, the first carrier CA1 is coupled to the input shaft 14, namely, to the engine 8, and the first sun gear S1 is coupled to the first motor M1, while the first ring gear R1 is coupled to the power transmitting member 18. The power distributing mechanism 16 thus constructed is placed in a differential state in which the first sun gear S1, first carrier CA1 and the first ring gear R1 as the three elements of the first planetary gear set 24 rotate relative to each other to perform a differential function, so that the power of the engine 8 is distributed between the first motor M1 and the power transmitting member 18. At the same time, part of the power of the engine 8 thus distributed is converted by the first motor M1 into electric energy, which may be stored or used for rotating/driving the second motor M2. Thus, the differential unit 11 (power distributing mechanism 16) functions as an electric differential device, and is operable in, for example, a so-called stepless shifting state (electric CVT state) in which the rotational speed of the power transmitting member 18 is continuously changed even if the engine 8 runs at a given speed. Namely, the differential unit 11 functions as an electric, continuously variable transmission of which the speed ratio γ0 (= the rotational speed N_{IN} of the input shaft 14 / the rotational speed N₁₈ of the power transmitting member 18) is continuously varied from the minimum value γ0min to the maximum value γ0max. Thus, the operating states of the first motor M1, second motor M2 and engine 8 coupled in a power transmittable manner to the power distributing mechanism 16 (differential unit 11) are controlled so that a differential state or difference between the rotational speed of the input shaft 14 and the rotational speed of the power transmitting member 18 is controlled.

The automatic transmission 20 includes a single pinion type second planetary gear set 26, a single pinion type third planetary gear set 28 and a single pinion type fourth planetary gear set 30, and is referred to as a planetary-gear-type multiple-speed transmission that functions as a stepped shifting type automatic transmission having two or more gear positions. The second planetary gear set 26 includes a second sun gear S2, a second planet gear P2, a second carrier CA2 that supports the second planet gear P2 such that the gear P2 can rotate about its own axis and about the axis of the gear set 26, and a second ring gear R2 that engages with the second sun gear S2 via the second planet gear P2. The second planetary gear set 26 has a gear ratio p2 of, for example, about 0.562. The third planetary gear set 28 includes a third sun gear S3, a third planet gear P3, a third carrier CA3 that supports the third planet gear P3 such that the gear P3 can rotate about its own axis and about the axis of the gear set 28, and a third ring gear R3 that engages with the third sun gear S3 via the third planet gear P3. The third planetary gear set 28 has a gear ratio p3 of, for example, about 0.425. The fourth planetary gear set 30 includes a fourth sun gear S4, a fourth planet gear P4, a fourth carrier CA4 that supports the fourth planet gear P4 such that the gear P4 can rotate about its own axis and about the axis of the gear set 30, and a fourth ring gear R4 that engages with the fourth sun gear S4 via the fourth planet gear P4. The fourth planetary gear set 30 has a gear ratio p4 of, for example, about 0.421. The above-mentioned gear ratio p2 is expressed as ZS2/ZR2, and the gear ratio p3 is expressed as ZS3/ZR3, while the gear ratio p4 is expressed as ZS4/ZR4, where ZS2 is the number of teeth of the second sun gear S2, ZR2 is the number of teeth of the second ring gear R2, ZS3 is the number of teeth of the third sun gear S3, ZR3 is the number of teeth of the third ring gear R3, ZS4 is the number of teeth of the fourth sun gear S4, and ZR4 is the number of teeth of the fourth ring gear R4.

In the automatic transmission 20, the second sun gear S2 and the third sun gear S3 are integrally coupled to each other to be selectively coupled to the power transmitting member 18 via a second clutch C2 and selectively coupled to the case 12 via a first brake B1. The second carrier CA2 is selectively coupled to the case 12 via a second brake B2, and the fourth ring gear R4 is selectively coupled to the case 12 via a third brake B3. The second ring gear R2, third carrier CA3 and the fourth carrier CA4 are integrally coupled to the output shaft 22, and the third ring gear R3 and the fourth sun gear S4 are integrally coupled to each other to be selectively coupled to the power transmitting member 18 via a first clutch C2.

Thus, the automatic transmission 20 and the differential unit 11 (power transmitting member 18) are selectively coupled to each other via the first clutch C1 or second clutch C2 used for establishing a selected speed or gear position of the automatic transmission 20. In other words, the first clutch C1 and the second clutch C2 function as coupling devices for switching the power transmission path between the power transmitting member 18 and the automatic transmission 20, namely, the power transmission path from the differential unit 11 (transmitting member 18) to the driving wheels 34, between a power transmittable state in which power can be transmitted through the power transmission path, and a power transmission cut-off state in which power transmission through the power transmission path is cut off. Namely, the power transmission path is placed in the power transmittable state when at least one of the first clutch C1 and the second clutch C2 is engaged, and is placed in the power transmission cut-off state when the first clutch C1 and the second clutch C2 are released.

In the automatic transmission 20, one or more coupling devices to be released is/are released and one or more coupling devices to be engaged is/are engaged so that clutch to clutch shift is carried out so as to establish a selected gear position (speed) in which the transmission 20 provides a selected speed ratio γ (= the rotational speed N₁₈ of the power transmitting member 18 / the rotational speed N_{OUT} of the output shaft 22). The speed ratio γ changes at substantially the same rate or ratio from one gear position to the next gear position. For example, as shown in the engagement table of FIG. 2, the 1^{st}-speed gear position in which the speed ratio γ1 is the maximum value, e.g., about 3.357, is established when the first clutch C1 and the third brake B3 are engaged, and the 2^{nd}-speed gear position in which the speed ratio γ2 is smaller than that of the 1^{st}-speed gear position and is equal to, for example, about 2.180 is established when the first clutch C1 and the second brake B2 are engaged. The 3^{rd}-speed gear position in which the speed ratio γ3 is smaller than that of the 2^{nd}-speed gear position and is equal to, for example, about 1.424 is established when the first clutch C1 and the first brake B1 are engaged, and the 4^{th}-speed gear position in which the speed ratio γ4 is smaller than that of the 3^{rd}-speed gear position and is equal to, for example, 1.000 is established when the first clutch C1 and the second clutch C2 are engaged. Also, when the second clutch C2 and the third brake B3 are engaged, the reverse gear position (reverse speed) in which the speed ratio γR is between that of the 1^{st}-speed gear position and that of the 2^{nd}-speed gear position and is equal to, for example, 3.209 is established. Also, the automatic transmission 20 is placed in the neutral "N" state when the first clutch C1, second clutch C2, first brake B1, second brake B2 and the third brake B3 are released.

The first clutch C1, second clutch C2, first brake B1, second brake B2 and the third brake B3 (which may be hereinafter referred to as "clutch C" or "brake B" if they need not be particularly discriminated) are hydraulic friction devices or frictionally coupling devices as coupling elements often used in conventional vehicular automatic transmissions. Each of the clutches C and brakes B may be in the form of a wet multiple disc clutch in which a plurality of mutually superposed friction plates are pressed by a hydraulic actuator, or a band brake in which one end of one or two bands wound on the outer circumferential surface of a rotating drum is pulled by a hydraulic actuator so that the band(s) is/are tightened. The wet multiple disc clutch or band brake is operable to selectively couple two members between which the clutch or brake is interposed, to each other.

In the shifting mechanism 10 constructed as described above, the differential unit 11 that functions as a continuously variable transmission and the automatic transmission 20 constitute a continuously variable transmission as a whole. In the case where the differential unit 11 is controlled so that its speed ratio is kept constant, the differential unit 11 and the automatic transmission 20 cooperate to provide a system equivalent to a stepped shifting transmission having two or more gear positions.

More specifically, when the differential unit 11 functions as a continuously variable transmission, and the automatic transmission 20 coupled in series with the differential unit 11 functions as a stepped shifting transmission, the speed of rotation applied to the automatic transmission 20 when placed in a certain gear position M (which will be hereinafter referred to as "input rotation speed of the automatic transmission 20"), i.e., the rotational speed of the power transmitting member 18 (hereinafter referred to as "transmitting member speed N₁₈"), is steplessly or continuously changed so that a certain range of speed ratio over which the speed ratio is steplessly variable can be provided in the gear position M. Thus, the total speed ratio γT (= the rotational speed N_{IN} of the input shaft 14 / the rotational speed N_{OUT} of the output shaft 22) of the shifting mechanism 10 can be made steplessly or continuously variable, and the shifting mechanism 10 as a whole provides a continuously variable transmission. The total speed ratio γT of the shifting mechanism 10 as a whole is formed based on the speed ratio γ0 of the differential unit 11 and the speed ratio γ of the automatic transmission 20.

For example, the transmitting member rotational speed N₁₈ is steplessly or continuously changed with respect to each of the 1^{st}-speed to 4^{th}-speed gear positions and reverse gear position of the automatic transmission 20 as indicated in the engagement table of FIG. 2, so that each gear position provides a certain range of speed ratio over which the speed ratio is steplessly variable. Thus, the speed ratio can be steplessly and continuously changed between adjacent gear positions, and the total speed ratio γT of the shifting mechanism 10 as a whole can be made steplessly variable.

When the speed ratio of the differential unit 11 is controlled to be constant, and the clutches C and brakes B are selectively engaged or released so as to establish a selected one of the 1^{st}-speed to 4^{th}-speed gear positions and reverse gear position, the total speed ratio γT of the shifting mechanism 10 is provided for each gear position such that the total speed ratio γT changes at substantially the same rate or ratio from one gear position to the next-speed gear position. Thus, the shifting mechanism 10 operates in substantially the same manner as a stepped shifting transmission having two or more gear positions.

If the speed ratio γ0 of the differential unit 11 is controlled to be fixed at "1", for example, the total speed ratio γT of the shifting mechanism 10 corresponding to each of the 1^{st}-speed to 4^{th}-speed gear positions and reverse gear position of the automatic transmission 20 is equal to the speed ratio γ of the automatic transmission 20 placed in the same gear position as indicated in the engagement table of FIG. 2. If the speed ratio γ0 of the differential unit 11 is controlled to be fixed at a value smaller than 1, e.g., about 0.7, when the automatic transmission 20 is placed in the 4^{th}-speed gear position, the total speed ratio γT becomes equal to a value, such as about 0.7, which is smaller than the speed ratio γ of the automatic transmission 20 placed in the 4^{th}-speed gear position.

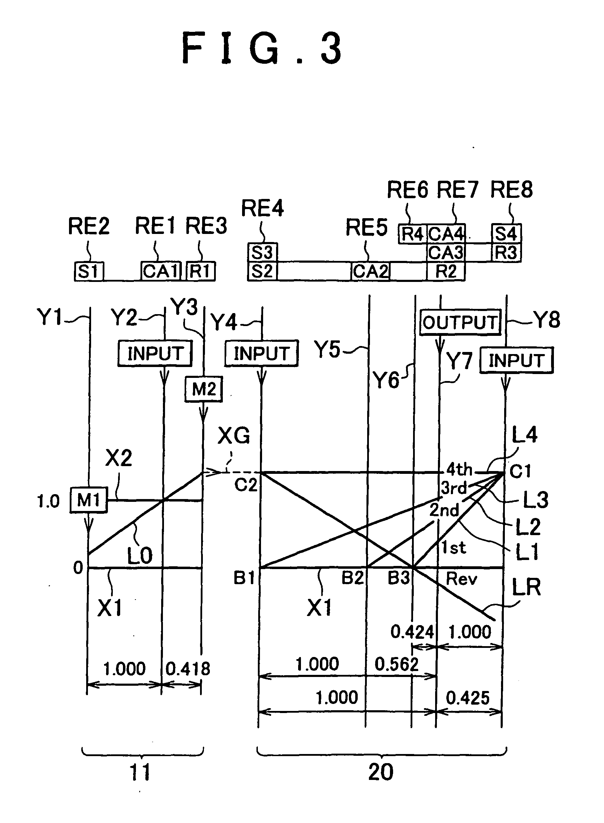

FIG. 3 is an alignment chart in which the relationships among the rotational speeds of respective rotary elements of the differential unit 11 and automatic transmission 20 of the shifting mechanism 10 are expressed on straight lines, where the coupling conditions of the rotary elements vary from one gear position to another. The alignment chart of FIG. 3 is a two-dimensional coordinate system consisting of the horizontal axis that indicates the relationships among the gear ratios p of the respective planetary gear sets 24, 26, 28, 30, and the vertical axis that indicates the relative rotational speeds. In FIG. 3, horizontal line X1 represents a rotational speed of zero, and horizontal line X2 represents a rotational speed of "1.0", namely, indicates the rotational speed N_{E} of the engine 8 coupled to the input shaft 14, while horizontal line XG indicates the rotational speed of the power transmitting member 18.

In FIG. 3, three vertical lines Y1, Y2 and Y3 corresponding to three elements of the power distributing mechanism 16 of the differential unit 11 indicate the relative rotational speeds of the first sun gear S1 as a second rotary element (second element) RE2, the first carrier CA1 as a first rotary element (first element) RE1, and the first ring gear R1 as a third rotary element (third element) RE3, which are arranged in this order when viewed from the left-hand side. The intervals of the vertical lines Y1, Y2, Y3 are determined based on the gear ratio ρ1 of the first planetary gear set 24. Also in FIG. 3, five vertical lines Y4, Y5, Y6, Y7 and Y8 associated with the automatic transmission 20 represent the second sun gear S2 and third sun gear S3 coupled to each other and corresponding to a fourth rotary element (fourth element) RE4, the second carrier CA2 as a fifth rotary element (fifth element) RE5, the fourth ring gear R4 as a sixth rotary element (sixth element) RE6, the second ring gear R2, third carrier CA3 and fourth carrier CA4 coupled to each other and corresponding to a seventh rotary element (seventh element) RE7, and the third ring gear R3 and fourth sun gear S4 coupled to each other and corresponding to an eighth rotary element (eighth element) RE8, which are arranged in this order from the left-hand side. The intervals between adjacent ones of the vertical lines are respectively determined based on the gear ratios p2, p3 and p4 of the second, third and fourth planetary gear sets 26, 28 and 30. As for the relationships among the vertical lines of the alignment chart, if the interval between the vertical lines representing the sun gear and the carrier is regarded as "1", the interval between the vertical lines representing the carrier and the ring gear corresponds to the gear ratio p of the planetary gear set in question. Namely, in the differential unit 11, an interval corresponding to "1" is provided between the vertical line Y1 and the vertical line Y2, and an interval corresponding to the gear ratio ρ1 is provided between the vertical line Y2 and the vertical line Y3. In the automatic transmission 20, an interval corresponding to "1" is provided between the sun gear and the carrier of each of the second, third and fourth planetary gear sets 26, 28, 30, and an interval corresponding to p is provided between the carrier and the ring gear.

The shifting mechanism 10 of this embodiment will be described in more detail with reference to the alignment chart of FIG. 3. In the power distributing mechanism 16 (differential unit 11), the first rotary element RE1 (first carrier CA1) of the first planetary gear set 24 is coupled to the input shaft 14, i.e., to the engine 8, and the second rotary element RE2 is coupled to the first motor M1, while the third rotary element RE3 (first ring gear R1) is coupled to the power transmitting member 18 and the second motor M2, so that rotation of the input shaft 14 is transmitted (applied) to the automatic transmission 20 via the power transmitting member 18. In FIG. 3, an inclined straight line L0 that passes an intersection point of Y2 and X2 indicates the relationship between the rotational speed of the first sun gear S1 and the rotational speed of the first ring gear R1.

For example, the differential unit 1 is placed in a differential state in which the first rotary element RE1 through the third rotary element RE3 are rotatable relative to each other. In this state, if the rotational speed of the first ring gear R1 represented by the intersection point of straight line L0 and vertical line Y3 is restricted by the vehicle speed V and is held substantially constant, the engine speed N_{E} is controlled so that the rotational speed of the first carrier CA1 represented by the intersection point of straight line L0 and vertical line Y2 is increased or reduced, whereby the rotational speed of the first sun gear S1, namely, the speed of the first motor M1, as represented by the intersection point of straight line L0 and vertical line Y1, is increased or reduced.

If the rotational speed of the first motor M1 is controlled so as to fix the speed ratio γ0 of the differential unit 11 at "1" so that the first sun gear S1 rotates at the same speed as the engine speed N_{E}, the straight line L0 is made identical with the horizontal line X2, and the first ring gear R1, or the power transmitting member 18, is rotated at the same speed as the engine speed N_{E}. If the rotational speed of the first motor M1 is controlled so as to fix the speed ratio γ0 of the differential unit 11 at a value, e.g., about 0.7, that is smaller than "1", so that the rotational speed of the first sun gear S1 is made equal to zero, the power transmitting member 18 is rotated at a speed N₁₈ that is increased to be higher than the engine speed N_{E}.

In the automatic transmission 20, the fourth rotary element RE4 is selectively coupled to the power transmitting member 18 via the second clutch C2, and is selectively coupled to the case 12 via the first brake B1, and the fifth rotary element RE5 is selectively coupled to the case 12 via the second brake B2. The sixth rotary element RE6 is selectively coupled to the case 12 via the third brake B3, and the seventh rotary element RE7 is selectively coupled to the power transmitting member 18 via the first clutch C 1.

In the automatic transmission 20 as described above, rotation of the power transmitting member 18 (the third rotary element RE3) as an output rotation member of the differential unit 11 is applied to the eighth rotary element RE8 when the first clutch C1 is engaged. As shown in FIG. 3, when the first clutch C1 and the third brake B3 are engaged, the automatic transmission 20 is placed in the 1^{st}-speed gear position in which the rotational speed of the output shaft 22 of the automatic transmission 20 is represented by an intersection point of an inclined, straight line L1 that passes an intersection point of vertical line Y8 indicating the rotational speed of the eighth rotary element RE8 and the horizontal line XG and an intersection point of vertical line Y6 indicating the rotational speed of the sixth rotary element RE6 and the horizontal line X1, and the vertical line Y7 indicating the rotational speed of the seventh rotary element RE7 coupled to the output shaft 22. Similarly, when the first clutch C1 and the second brake B2 are engaged, the automatic transmission 20 is placed in the 2^{nd}-speed gear position in which the rotational speed of the output shaft 22 is represented by an intersection point of an inclined, straight line L2 determined by engagement of the first clutch C1 and second brake B2, and vertical line V7 indicating the rotational speed of the seventh rotary element RE7 coupled to the output shaft 22. When the first clutch C1 and the first brake B1 are engaged, the automatic transmission 20 is placed in the 3^{rd}-speed gear position in which the rotational speed of the output shaft 22 is represented by an intersection point of an inclined, straight line L3 determined by engagement of the first clutch C1 and the first brake B1, and the vertical line Y7 indicating the rotational speed of the seventh rotary element RE7 coupled to the output shaft 22. When the first clutch C1 and the second clutch C2 are engaged, the automatic transmission 20 is placed in the 4^{th}-speed gear position in which the rotational speed of the output shaft 22 is represented by an intersection point of a horizontal straight line L4 determined by engagement of the first and second clutches C1, C2, and the vertical line Y7 indicating the rotational speed of the seventh rotary element RE7 coupled to the output shaft 22.

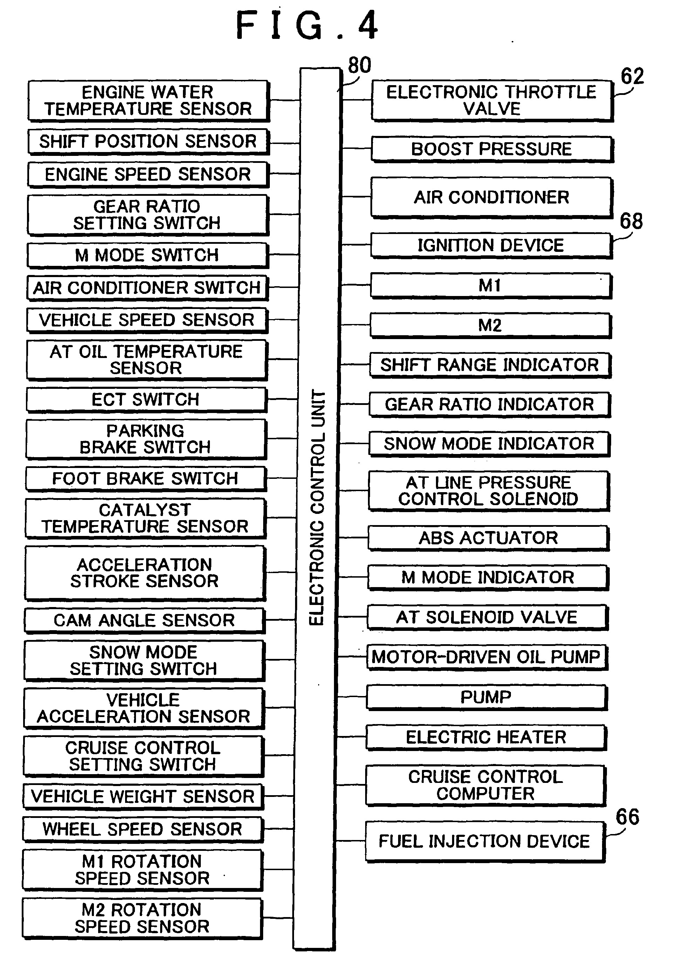

FIG. 4 illustrates signals applied to an electronic control unit 80 for controlling the shifting mechanism 10 of this embodiment, and signals generated from the electronic control unit 80. The electronic control unit 80 includes a so-called microcomputer consisting principally of CPU, ROM, RAM and input and output interfaces, and performs signal processing according to programs stored in advance in the ROM while utilizing the temporary storage function of the RAM, so as to perform hybrid drive control associated with the engine 8 and the first and second motors M1, M2 and other drive controls, such as shift control of the automatic transmission 20.

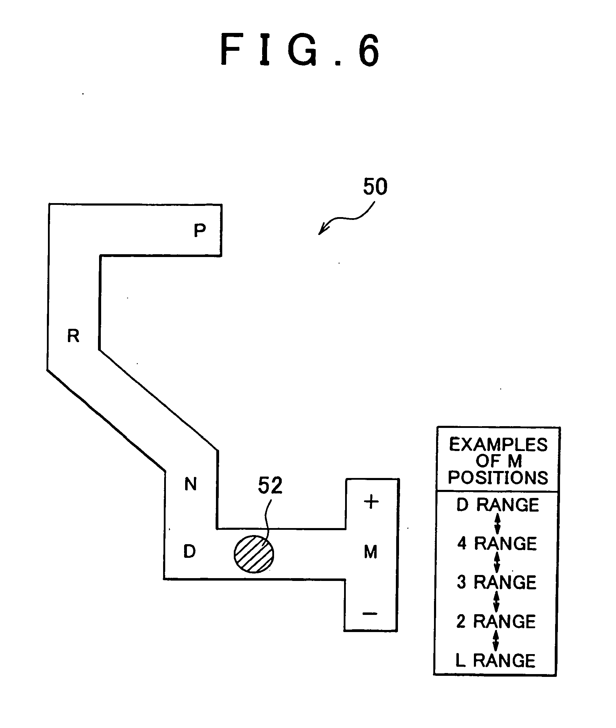

Various signals are supplied from various sensors and switches as shown in FIG. 4 to the electronic control unit 80. More specifically, the signals applied to the electronic control unit 80 include a signal indicative of the engine water temperature TEMPw, a signal indicative of the shift position P_{SH} of the shift lever 52 (see FIG. 6) or the number of times of operations at "M" position, a signal indicative of the engine speed N_{E} as the rotational speed of the engine 8, a signal indicative of set values of the gear ratios, a signal as a command for implementing the M mode (manual shift running mode), a signal indicative of the operation of an air conditioner, a signal indicative of the vehicle speed V corresponding to the rotational speed N_{OUT} of the output shaft 22 (which may be hereinafter called "output shaft speed"), a signal indicative of the working oil temperature T_{OIL} of the automatic transmission 20, a signal indicative of application of a parking brake, a signal indicative of application of a foot brake, a signal indicative of the catalyst temperature, a signal indicative of the accelerator pedal stroke Acc as an amount of operation of the accelerator pedal, which corresponds to the output (amount of power) required by the driver, a signal indicative of the cam angle, a signal indicative of setting of a snow mode, a signal indicative of the longitudinal acceleration G of the vehicle, a signal indicative of running under cruise control, a signal indicative of the weight of the vehicle, a signal indicative of the wheel speed of each wheel, a signal indicative of the rotational speed N_{M1} of the first motor M1 (hereinafter called "first motor speed N_{M1}"), a signal indicative of the rotational speed N_{M2} of the second motor M2 (hereinafter called "second motor speed N_{M2}"), and a signal indicative of the state of charge SOC of a storage device 56 (see FIG. 7).

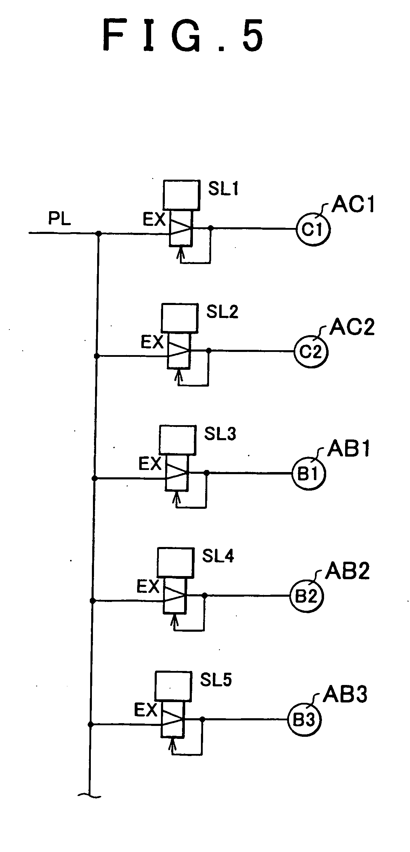

Also, various signals are generated from the electronic control unit 80. The signals include control signals transmitted to an engine power control device 58 (see FIG. 7) that controls the engine power, which include a drive signal to a throttle actuator 64 that controls the throttle opening θ_{TH} of an electronic throttle valve 62 provided in an intake pipe 60 of the engine 8, a fuel supply amount signal that controls the amount of fuel supplied to the intake pipe 60 or each cylinder of the engine 8 by a fuel injection device 66, and an ignition signal that designates the ignition timing of the engine 8, i.e., the time at which a fuel-air mixture is ignited by an injection device 68. The signals further include a boost pressure control signal for controlling the boost pressure, a motor-driven air conditioner driver signal for operating a motor-driven air conditioner, a command signal as a command for operation of the electric motors M1 and M2, a shift position display signal for operating a shift indicator, a gear ratio display signal for displaying the gear ratio, a snow-mode display signal that provides an indication that the vehicle is in a snow mode, an ABS operation signal for operating an ABS actuator that prevents slipping of the wheels during braking, an M-mode display signal that provides an indication that the M mode is selected, a valve command signal for operating solenoid-operated valves (linear solenoid valves) included in a hydraulic control circuit 70 (see FIG. 5 and FIG. 7) so as to control hydraulic actuators of the hydraulic friction devices of the differential unit 11 and the automatic transmission 20, a signal for regulating the line pressure P_{L} by means of a regulator valve (pressure regulating valve) provided in the hydraulic control circuit 70, a drive command signal for operating a motor-driven oil pump as an oil pressure source of the original pressure based on which the line pressure P_{L} is regulated, a signal for driving an electric heater, and a signal transmitted to a computer for performing cruise control.

FIG. 5 is a circuit diagram showing a portion of the hydraulic control circuit 70 which involves linear solenoid valves SL1 - SL5 that control operations of respective hydraulic actuators (hydraulic cylinders) AC1, AC2, AB1, AB2, AB3 of the clutches C1, C2 and brakes B1- B3.

In FIG. 5, the line pressure P_{L} is regulated by the linear solenoid valves SL1 - SL5 into engaging pressures PC1, PC2, PB1, PB2, PB3, respectively, according to command signals from the electronic control unit 80, and these engaging pressures are directly supplied to the respective hydraulic actuators AC1, AC2, AB1, AB2 and AB3. To provide the line pressure P_{L}, a hydraulic pressure (serving as the original pressure) produced by a motor-driven oil pump (not shown) or a mechanical oil pump that is driven/rotated by the engine 8 is regulated by, for example, a relief type pressure regulating valve (regulator valve) into the line pressure P_{L} whose level is commensurate with the engine load as represented by the accelerator pedal stroke or throttle opening.

The linear solenoid valves SL1 - SL5, which have the same basic construction, are independently energized and deenergized by the electronic control unit 80, so that the hydraulic pressures of the respective hydraulic actuators AC1, AC2, AB1, AB2, AB3 are independently regulated or controlled, and the engaging pressures PC1, PC2, PB1, PB2, PB3 of the clutches C1, C2 and brakes B1, B2, B3 are controlled. Thus, the automatic transmission 20 is placed in each of the gear positions (i.e., each speed of the automatic transmission 20 is established) by engagement of predetermined coupling devices as indicated in, for example, the engagement table of FIG. 2. In the shift control of the automatic transmission 20, so-called clutch to clutch shift is carried out in which release and engagement of selected ones of the clutches C and brakes B involved in the shift are controlled simultaneously.

FIG. 6 shows one example of shifting device 50 as a switching device that is manually operated by the driver to select one from a plurality of shift positions P_{SH}. The shifting device 50 is mounted, for example, at one side of the driver's seat, and includes a shift lever 52 that is operated by the driver to select one from the shift positions P_{SH}.

The shift lever 52 is manually operated to a selected one of the parking position "P (parking)", reverse running position "R (reverse)" for reverse running, neutral position "N (neutral)", automatic shift forward running position "D (drive)" for running the vehicle forward with automatic shifting, and the manual shift forward running position "M (manual)" for running the vehicle forward with manual shifting. In the parking position "P", the shifting mechanism 10, or the automatic transmission 20, is placed in a neutral condition in which the power transmission path is cut off or disconnected, and the output shaft 22 of the automatic transmission 20 is locked. In the neutral position "N", the automatic transmission 20 is placed in a neutral condition in which the power transmission path in the shifting mechanism 10 is cut off or disconnected. In the manual shift forward running position "D", the automatic transmission 20 operates in an automatic shift mode in which automatic shift control is carried out within a certain range of the total speed ratio γT of the shifting mechanism 10 over which the speed ratio γT is variable, namely, within a range provided by the range of the speed ratio steplessly changed by the differential unit 11 and each of the 1^{st}-speed to 4^{th}-speed gear positions of the automatic transmission 20 to which the transmission 20 is automatically shifted. In the manual shift forward running position "M", the automatic transmission 20 operates in a manual shift mode in which so-called shift ranges are set for restricting high-speed gear positions of the automatic transmission 20.

In accordance with a manual operation of the shift lever 52 to each of the shift positions P_{SH}, the hydraulic control circuit 70 is electrically switched or controlled so as to establish the selected one of the reverse gear position "R", neutral position "N" and 1^{st}-speed through 4^{th}-speed gear positions of the forward running position "D" as indicated in the engagement table of FIG. 2.

Of the shift positions P_{SH} as shown in FIG. 6, the "P" position and "N" position are non-running positions selected when the vehicle is to be inhibited from running, namely, non-driving positions in which both of the first clutch C1 and the second clutch C2 are released as indicated in the engagement table of FIG. 2. With the first clutch C1 and second clutch C2 thus released, the power transmission path in the automatic transmission 20 is cut off or disconnected to make it impossible to drive the vehicle, namely, the power transmission path is switched to a power transmission cut-off condition. The "R" position, "D" position and "M" position are running positions selected when running the vehicle, namely, driving positions in which at least one of the first clutch C1 and the second clutch C2 is engaged. With the first clutch C1 and/or the second clutch C2 thus engaged, the power transmission path in the automatic transmission 20 permits power to be transmitted therethrough so as to enable the vehicle to be driven, namely, the power transmission path is switched to a power transmissible condition.

More specifically, when the shift lever 52 is manually operated from the "P" position or "N" position to the "R" position, the second clutch C2 is engaged so that the power transmission path in the automatic transmission 20 is switched from the power transmission cut-off condition to the power transmittable condition. When the shift lever 52 is manually operated from the "N" position to the "D" position, at least the first clutch C1 is engaged so that the power transmission path in the automatic transmission 20 is switched from the power transmission cut-off condition to the power transmittable condition. When the shift lever 52 is manually operated from the "R" position to the "P" position or "N" position, the second clutch C2 is released so that the power transmission path in the automatic transmission 20 is switched from the power transmittable condition to the power transmission cut-off condition. When the shift lever 52 is manually operated from the "D" position to the "N" position, the first clutch C1 and the second clutch C2 are released so that the power transmission path in the automatic transmission 20 is switched from the power transmittable condition to the power transmission cut-off condition.

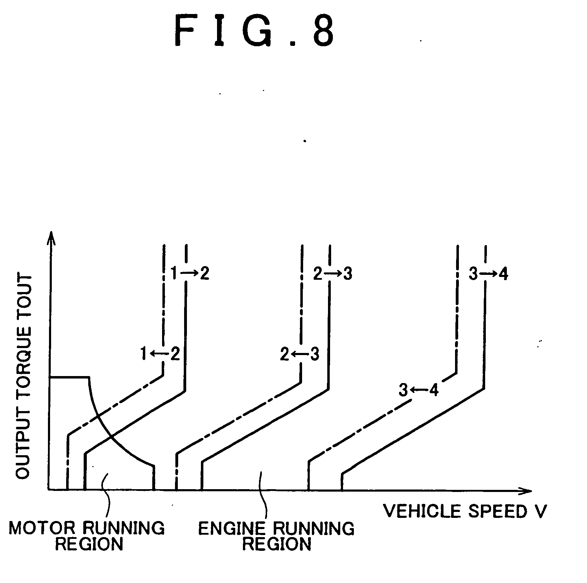

FIG. 7 is a function block diagram useful for explaining principal control functions performed by the electronic control unit 80. In FIG. 7, a stepped shift control means 82 determines whether shifting of the automatic transmission 20 is to be carried out, namely, determines a gear position or speed to which the automatic transmission 20 is to be shifted, from a shift diagram or shift map as shown in FIG. 8, based on vehicle conditions indicated by the actual vehicle speed V and the required output torque TOUT of the automatic transmission 20. In the shift diagram or shift map of FIG. 8, upshift lines (solid lines) and downshift lines (dashed lines) that are stored in advance are plotted with respect to the vehicle speed V and the output torque TOUT of the automatic transmission 20 as variables. The stepped shift control means 82 then performs automatic shift control of the automatic transmission 20 so as to provide the gear position or speed thus determined.

In order to establish the gear position in accordance with the engagement table of FIG. 2, for example, the stepped shift control means 82 generates a command (shift output command, hydraulic pressure command) for engaging and/or releasing one or more hydraulic friction devices involved in the shifting of the automatic transmission 20 to the determined gear position, to the hydraulic control circuit 70. Namely, the stepped shift control means 82 generates a command that executes clutch to clutch shifting by releasing one or more friction devices to be released and engaging one or more friction devices to be engaged, which are involved in the shifting of the automatic transmission 20 to the determined gear position, to the hydraulic control circuit 70. In response to the command, the hydraulic control circuit 70 actuates a selected one or ones of the linear solenoid valves SL in the hydraulic control circuit 70 to operate the hydraulic actuators of the hydraulic friction devices involved in the shifting, so as to release the friction device(s) to be released and engage the friction device(s) to be engaged to thereby accomplish shifting of the automatic transmission 20.

A hybrid control means 84 controls the speed ratio γ0 of the differential unit 11 as an electric, continuously variable transmission by changing the distribution of driving force between the engine 8 and the second motor M2 and the reaction force due to power generation of the first motor M1 to the optimum, while operating the engine 8 in an efficient operating region. When the vehicle runs at a certain vehicle speed V, the target (required) power of the vehicle is calculated from the accelerator pedal stroke Acc as the amount of power required by the driver and the vehicle speed V, and total target power that needs to be produced is calculated from the target power of the vehicle and the charge requirement (required charge value). Then, target engine power is calculated in view of a transmission loss, accessory loads, assist torque of the second motor M2, and so forth, so as to achieve the total target power, and the engine 8 is controlled to provide the engine speed N_{E} and the engine torque T_{E} that achieve the target engine power, and the amount of electric power generated by the first motor M1 is controlled.

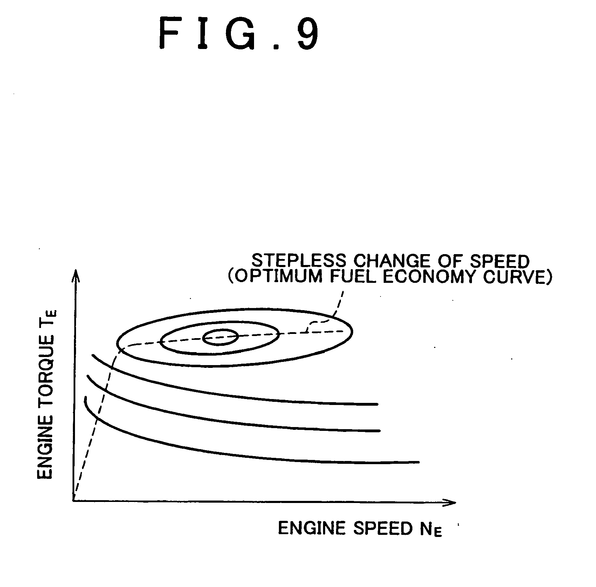

For example, the hybrid control means 84 performs the above-described control in view of the selected gear position or speed of the automatic transmission 20, for improvements in the power performance and fuel economy. In the hybrid control, the differential unit 11 functions as an electric continuously variable transmission so that the engine speed N_{E} that is determined so as to operate the engine 8 in a highly efficient operating region matches the rotational speed of the power transmitting member 18 which is determined based on the vehicle speed V and the selected gear position of the automatic transmission 20. Namely, the hybrid control means 84 determines the target value of the total speed ratio γT of the shifting mechanism 10 so that the engine 8 is operated along the optimum fuel economy curve (fuel economy map, relationship) as indicated by the broken line in FIG. 9, which is empirically obtained and stored in advance so as to achieve both desired driving performance and fuel economy during stepless shift running, in a two-dimensional coordinate system having the horizontal axis indicating the engine speed N_{E} and the vertical axis indicating the output torque (engine torque) T_{E}. For example, the target value of the total speed ratio γT is determined so that the engine 8 operates with the engine torque T_{E} and the engine speed N_{E} for producing engine power needed to satisfy the target power (total target power, required driving force). Then, the hybrid control means 84 controls the speed ratio γ0 of the differential unit 11 in view of the selected gear position of the automatic transmission 20, and controls the total speed ratio γT within a range of possible change thereof so as to achieve the target value of the total speed ratio γT.

During the operation as described above, the hybrid control means 84 supplies electric energy produced by the first motor M1 to the storage device 56 or the second motor M2 via the inverter 54. Thus, while a principal portion of the power of the engine 8 is mechanically transmitted to the power transmitting member 18, a part of the power of the engine 8 is consumed by the first motor M1 for electric power generation, and is converted into electric energy, which is supplied to the second motor M2 via the inverter 54 for driving the second motor M2, so that that part of the power of the engine 8 is transmitted from the second motor M2 to the transmitting member 18. Thus, the devices associated with the above process from production of electric energy to consumption at the second motor M2 constitute an electric path along which a part of the power of the engine 8 is converted into electric energy, which is then converted into mechanical energy.

The hybrid control means 84 controls the first motor speed N_{M1} and/or the second motor speed N_{M2} through the electric CVT function of the differential unit 11, irrespective of whether the vehicle is stopped or running, so that the engine speed N_{E} is held substantially constant, or controlled to a desired speed. In other words, the hybrid control means 84 is able to control the first motor speed N_{M1} and/or second motor speed N_{M2} to a desired rotational speed or speeds while keeping the engine speed N_{E} substantially constant or controlling the engine speed N_{E} to a desired speed.

For example, in the case where the engine speed N_{E} is to be raised during running of the vehicle, the hybrid control means 84 raises the first motor speed N_{M1} while keeping the second motor speed N_{M2} that is restricted by the vehicle speed V (driving wheels 34) substantially constant, as is understood from the alignment chart of FIG. 3. In the case where the engine speed N_{E} is to be kept substantially constant during shifting of the automatic transmission 20, the hybrid control means 84 changes the first motor speed N_{M1} in a direction opposite to that of change of the second motor speed N_{M2} in accordance with the shifting of the automatic transmission 20, while keeping the engine speed N_{E} substantially constant.

The hybrid control means 84 is functionally provided with engine power control means for controlling the engine 8 so as to generate necessary engine power. To this end, the hybrid control means 84 generates one or more commands alone or in combination to the engine power control device 58, so as to perform throttle control, fuel injection control and ignition timing control. For the throttle control, the degree of opening of the electronic throttle valve 62 is controlled by the throttle actuator 64. For the fuel injection control, the amount of fuel injected from the fuel injection device 66 and the injection timing are controlled. For the ignition timing control, the timing of ignition by the ignition device 68, such as an igniter, is controlled.

For example, the engine power control device 58 performs throttle control by driving the throttle actuator 64 based on the accelerator pedal stroke Acc, from a pre-stored relationship (not shown), and increasing the throttle opening θ_{TH} as the accelerator pedal stroke Acc increases. In accordance with the commands from the hybrid control means 84, the engine power control device 58 performs engine torque control by, for example, controlling the degree of opening of the electronic throttle valve 62 by means of the throttle actuator 64 for the throttle control, controlling fuel injection by the fuel injection device 66 for the fuel injection control, and controlling the ignition timing of the ignition device 68, such as an igniter, for the ignition timing control.

Also, the hybrid control means 84 is able to operate the vehicle in a motor running mode by utilizing the electric CVT function (differential operation) of the differential unit 11, irrespective of whether the engine 8 is stopped or running at idle. For example, the hybrid control means 84 executes the motor running mode in a relatively low output torque TOUT region or low engine torque T_{E} region in which the engine efficiency is generally deemed lower than that in a high torque region, or when the vehicle is in a relatively low vehicle speed V region or low load region. In order to prevent dragging of the engine 8 that is at rest during motor running and improve the fuel economy, the hybrid control means 84 controls the first motor speed N_{M1} to a negative rotational speed, to bring the first motor M1 into a no-load condition and run the motor M1 at idle, and utilizes the electric CVT function (differential function) of the differential unit 11 so as to keep the engine speed N_{E} at zero or substantially zero as needed.

Even when the vehicle is in an engine running region, the hybrid control means 84 supplies electric energy from the first motor M1 and/or electric energy from the storage device 56 to the second motor M2 via the above-mentioned electric path, so as to drive the second motor M2 and cause the second motor M2 to give torque to the driving wheels 34, for so-called torque assist as a supplement to the power of the engine 8.

By placing the first motor M1 in a no-load condition to freely rotate the motor M1 or let it idle, the hybrid control means 84 can bring the differential unit 11 into a condition where it cannot transmit torque, namely, into a condition where the power transmission path in the differential unit 11 is cut off, and no power is generated from the differential unit 11. Namely, the hybrid control means 84 can bring the differential unit 11 into a neutral condition in which the power transmission path is electrically cut off, by placing the first motor M1 in a no-load condition.

During coasting of the vehicle with the accelerator pedal being released or during application of a foot brake, the hybrid control means 84 functions as a regeneration control means for causing the kinetic energy of the vehicle, i.e., the reverse driving force transmitted from the driving wheels 34 toward the engine 8, to rotate or drive the second motor M2 so as to operate the motor M2 as a generator, and charging the storage device 56 with electric energy or current produced by the second motor M2, via the inverter 54, thereby to improve the fuel economy. In the regeneration control, the amount of the electric energy produced by regenerative running (braking) is determined based on the state of charge SOC of the storage device 56, the distribution of the braking force produced by a hydraulic brake system that provides braking force in accordance with the amount of operation of the brake pedal, and so forth.

During coasting or braking as described above, the automatic transmission 20 is shifted down if the output torque and the vehicle speed are reduced and an operating point defined by the output torque and the vehicle speed passes a downshift line as indicated by a dashed line in FIG. 8, for example, a line of downshift from the 3^{rd}-speed gear position to the 2^{nd}-speed gear position. To enable the downshifting, the rotational speed N₁₈ of the power transmitting member 18 is raised to a rotational speed N₁₈ that is determined based on the speed ratio of the gear position and the vehicle speed V after shifting. Here, since the accelerator pedal stroke Acc is equal to zero and the engine 8 is not able to raise the rotational speed N₁₈ of the transmitting member 18, the friction devices of the automatic transmission 20 are forced to be engaged or released so as to raise the rotational speed N₁₈ of the transmitting member 18 and accomplish the shifting. More specifically, when the automatic transmission 20 is shifted down from the 3^{rd}-speed gear position to the 2^{nd}-speed gear position, for example, clutch to clutch shift control is performed under which the first brake B1 is released and the second brake B2 is engaged. At this time, rotation of the driving wheels 34 is transmitted to the power transmitting member 18 via the automatic transmission 20, and the rotational speed N₁₈ of the transmitting member 18 is raised. As the downshift (clutch to clutch shift) proceeds with these friction devices (B1, B2) being engaged and released while slipping, the rotation of the driving wheels 34 is transmitted to the power transmitting member 18 via the automatic transmission 20, and the rotational speed N₁₈ of the transmitting member 18 is raised. If the hybrid control means 84 performs regeneration control during the downshift, the amount of work required for raising the rotational speed N₁₈ of the power transmitting member 18 is increased by an amount corresponding to the regeneration torque of the second motor M2, in other words, the inertia force of the transmitting member 18 appears to increase, which may result in an increase of shift shock at the time of shifting. Thus, a regeneration torque reducing means 86 as described later is operable to reduce regeneration torque as needed, so as to reduce shift shock.

A coast downshift determining means 88 determines whether the vehicle is coasting, and determines whether downshifting is being carried out. For example, the coast downshift determining means 88 detects an accelerator position signal indicative of the accelerator pedal position or stroke Acc as the amount of operation of the accelerator pedal 74 detected by an acceleration stroke sensor 72, and determines that the vehicle is in a coasting state when the accelerator pedal stroke Acc is equal to zero, namely, when the accelerator pedal 74 is not depressed. Also, downshifting is determined based on, for example, a downshift signal supplied from the stepped shift control means 82. More specifically, it is determined from the shift diagram of FIG. 8 whether the vehicle condition or operating point has passed a downshift line as indicated by a dashed line, and downshifting is determined if it is determined that the vehicle condition has passed a downshift line. In addition, downshifting is also determined when the shift lever 52 is operated to the manual shift forward running position "M", and downshift is selected and executed by a manual operation of the driver.

A second motor regeneration determining means 90 determines whether the current running condition of the vehicle is regenerative running, based on a regeneration permitting signal supplied from, for example, the hybrid control means 84. More specifically, during coasting or braking of the vehicle, for example, it is determined that regeneration control using the second motor M2 needs to be performed if the state of charge SOC of the storage device 56 does not reach about 80% of the upper limit of the state of charge.

An inertia phase determining means 92 determines whether the inertia phase is reached in the process of downshifting, based on, for example, the amount of change of the rotational speed of the second motor M2 supplied from the hybrid control means 84. More specifically, during downshifting, the inertia phase determining means 92 detects the rotational speed N_{M2} of the second motor M2 detected by a rotational speed sensor, such as a resolver, provided in the second motor M2, namely, detects the rotational speed N₁₈ of the power transmitting member coupled integrally to the second motor M2, and determines that the shifting has reached the inertia phase when the amount of change of the rotational speed N₁₈ per unit time exceeds a predetermined value.

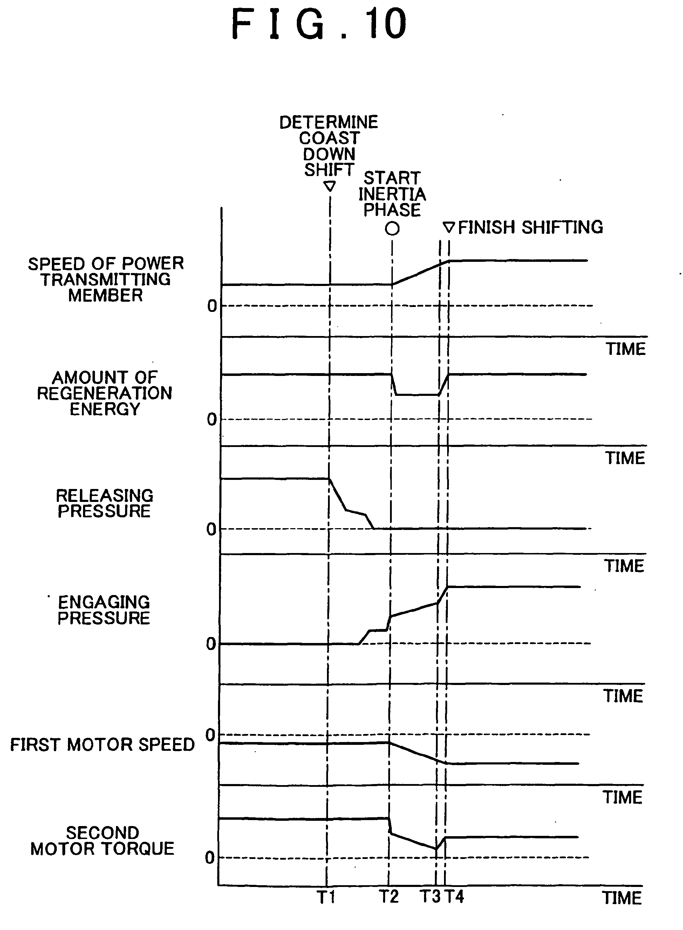

If the coast downshift determining means 88 and the second motor regeneration determining means 90 determine that coast downshift is being carried out and regeneration control can be performed, the regeneration torque reducing means 86 reduces regeneration torque produced by the second motor M2 as needed during the coast downshifting. The control operation of the regeneration torque reducing means 86 for reducing the regeneration torque will be described in detail with reference to the time chart of FIG. 10.

If clutch to clutch shift control from the 3^{rd}-speed gear position to the 2^{nd}-speed gear position, for example, is started during coasting at time T1 as indicated in FIG. 10, the engaging pressure of the first brake B1 as a friction device to be released is reduced while the engaging pressure of the second brake B2 as a friction device to be engaged is gradually increased, as shown in FIG. 2, so that the automatic transmission 20 enters the inertia phase at time T2 at which the rotational speed N₁₈ of the power transmitting member 18 starts changing. The establishment of the inertia phase is determined by, for example, detecting a change of the rotational speed N_{M2} of the second motor M2 that is coupled to and rotates as a unit with the transmitting member 18. More specifically, the rotational speed N_{M2} of the second motor M2 is detected by a rotational speed sensor, such as a resolver, provided in the second motor M2, and the establishment of the inertia phase is determined when the amount of change of the rotational speed N_{M2} exceeds a predetermined value. Upon determination of the inertia phase at time T2, the regeneration torque of the second motor M2 is reduced by the regeneration torque reducing means 86, whereby the amount of regeneration energy is reduced.

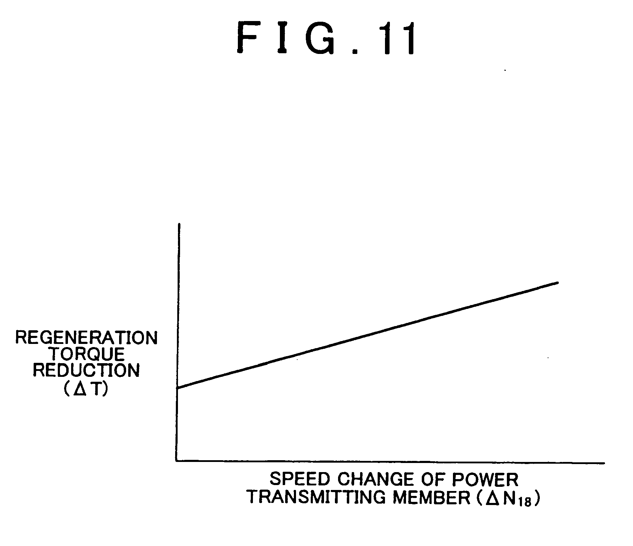

The amount of reduction of the regeneration energy is controlled by the second motor M2. In this embodiment, the amount of reduction is changed in accordance with the rate of change of the rotational speed N₁₈ of the power transmitting member 18, or that of the second motor M2, during the inertia phase. More specifically, as a change of the rotational speed N₁₈ of the transmitting member 18 increases, the amount of reduction ΔT of the regeneration torque produced by the second motor M2 is set to a larger value, as shown in FIG. 11. The amount of reduction ΔT is set in advance by experiment. If the amount of reduction ΔT is increased, the rotational speed N₁₈ of the power transmitting member 18 is easily raised, and shift shock can be reduced. However, the amount of regeneration energy is reduced, and the fuel economy may deteriorate. Therefore, the amount of reduction ΔT is set to a value at which shift shock can be sufficiently reduced and at the same time reduction of the fuel efficiency can be minimized. While the amount of reduction of regeneration torque is increased in accordance with the amount of change of the rotational speed N₁₈ of the power transmitting member 18 in this embodiment, a similar effect is obtained even if the rotational speed N₁₈ of the transmitting member 18 is replaced by the rotational speed N_{E} of the engine 8. When the transmission 20 is manually shifted down, for example, the amount of reduction of regeneration torque is increased in accordance with the amount of change of the rotational speed N₁₈ of the power transmitting member 18, or the amount of change of the rotational speed N_{E} of the engine 8, so that the engine speed N_{E} can be quickly raised, and the driver can feel an enhanced sense of deceleration due to the increase of the engine speed N_{E}.

During the inertia phase between time T2 and time T3, the rotational speed N_{M1} of the first motor M1 is controlled so as not to change the rotational speed N_{E} of the engine 8. When the engine is at rest, for example, the first motor speed N_{M1} is controlled to a negative speed so as to bring the first motor M1 into a no-load condition in which the motor M1 runs at idle, and the engine speed N_{E} is kept at zero or substantially zero as needed, utilizing the electric CVT function (differential operation) of the differential unit 11, thereby to prevent or restrict dragging of the engine 8 and improve the fuel economy.

During a period between time T3 and time T4, the regeneration torque of the second motor M2 is gradually increased so as to resume a condition prior to reduction of the regeneration torque, which is similar to a condition between time T1 and time T2. With the regeneration torque thus increased, the amount of regeneration energy is also gradually increased, and a condition prior to reduction of the regeneration energy is resumed at time T4. By gradually increasing the regeneration torque of the second motor M2 in this manner, it is possible to prevent a rapid change in the torque of the second motor M2 in a terminal period of shifting. The above-mentioned time T3 is determined in advance by, for example, timer control, and the above-mentioned time T4 is determined based on a change of the rotational speed N₁₈ of the power transmitting member 18, or a change of the rotational speed of the second motor M2.

The regeneration torque reducing means 86 controls the amount of reduction ΔT of the regeneration torque such that the reduction amount ΔT can vary depending on the type of the selected shift mode of the automatic transmission 20. More specifically, if the shift lever 52 of the shifting device 50 is moved to the manual shift forward running position "M" in the function block diagram of FIG. 7, a high-speed gear position of the automatic transmission 20 is restricted according to selection of the driver, and the transmission 20 may be shifted down, depending on the manual operation of the driver. In this case, the regeneration torque reducing means 86 reduces the amount of reduction of regeneration torque to a smaller value than that at the time of downshifting in the automatic shift mode as described above. As a result, the fuel economy of the vehicle is improved, but shift shock may be increased. In the manual shift mode, however, shift shock may be favorably applied to the driver, so that the driver can get a sense of shifting resulting from manual shifting by feeling the shift shock.

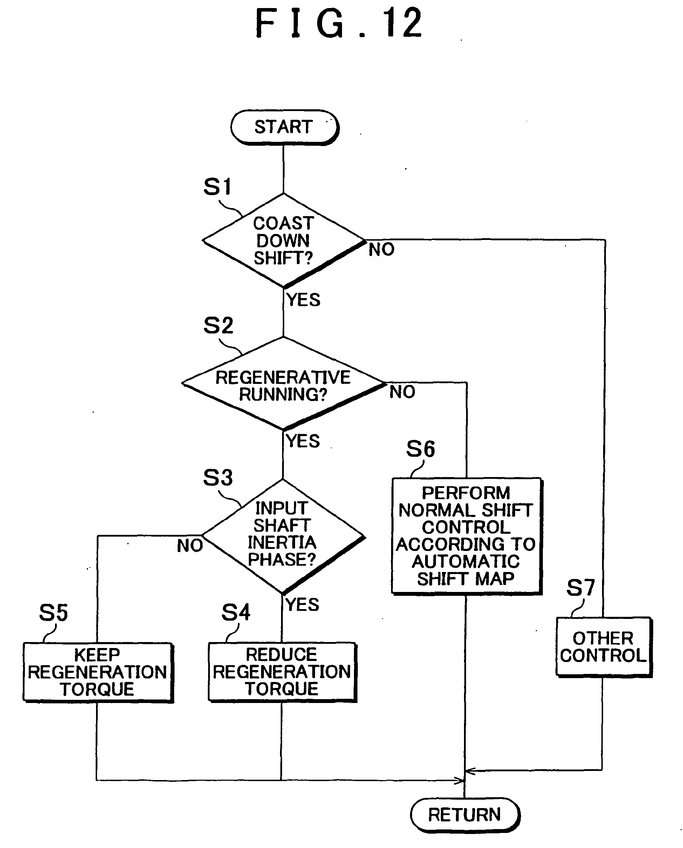

FIG. 12 is a flowchart useful for explaining a principal part of control operations of the electronic control unit 80, more specifically, a control operation to reduce shift shock caused by coast downshift during regenerative running. The control process of FIG. 12 is repeatedly executed at extremely short time intervals of, for example, several milliseconds to several tens of milliseconds.

Initially, in step S1 performed by the coast downshift determining means 88, it is determined whether the vehicle is in a coasting state with the accelerator pedal being released, and it is also determined whether a downshift is carried out during coasting, according to the shift map of FIG. 8 or in response to a manual downshifting operation. If a negative decision (NO) is made in step S1, other shift control of the automatic transmission 20, lockup control, and other controls are performed, and the present cycle of the routine of FIG. 12 is finished.

If an affirmative decision (YES) is made in step S1, it is determined in step S2 performed by the second motor regeneration determining means 90 whether the current running condition of the vehicle is regenerative running. If a negative decision (NO) is made in step S2, a gear position to which the automatic transmission 20 is to be shifted is determined, for example, from the automatic shift map as shown in FIG. 8, based on vehicle conditions as represented by the actual vehicle speed V and the required output torque T_{OUT} of the automatic transmission 20. Then, automatic shift control of the automatic transmission 20 is carried out so as to establish the gear position to which the transmission 20 is determined to be shifted.

If an affirmative decision (YES) is made in step S2, it is determined in step S3 performed by the inertia phase determining means 92 whether the shifting condition is the inertia phase in which the rotational speed N₁₈ of the power transmitting member 18 changes. If a negative decision (NO) is made in step S3, the regeneration torque is kept constant, or kept at the current level, in step S5, and the present cycle of the routine is finished. If an affirmative decision (YES) is made in step S3, the regeneration torque, or the amount of regeneration energy, of the second motor M2 is reduced in step S4 performed by the regeneration torque reducing means 86, and the present cycle of the routine is finished.

In the present embodiment, the regeneration torque reducing means 86 is provided for reducing regeneration torque of the second motor M2 during the inertia phase of coast downshift of the automatic transmission 20, as described above. By reducing the regeneration torque of the second motor M2 during the inertia phase, the amount of work required for producing regeneration torque of the second motor M2 is reduced, and the rotational speed N₁₈ of the power transmitting member 18 coupled to the differential unit 11 can be easily raised. Consequently, shift shock that occurs upon shifting is favorably reduced.

According to the present embodiment, the regeneration torque reducing means 86 makes the amount of reduction of regeneration torque variable depending on the type of the selected shift mode of the automatic transmission 20. Thus, the regeneration torque is favorably reduced depending on the shift mode, and shift shock can be controlled in accordance with the shift mode.

According to the present embodiment, the regeneration torque reducing means 86 reduces the amount of reduction of regeneration torque during coast downshift caused by manual shifting, to a smaller value than that during coast downshift caused by automatic shifting, so that shift shock is more likely to occur upon manual shifting, rather than automatic shifting. In this connection, it is desirable for the driver to get a sense of shifting based on his/her manual operation during shifting caused by the manual operation of the driver. Since shift shock is more likely to occur upon manual shifting, the driver can get a sense of shifting as needed or desired.

According to the present embodiment, the amount of reduction ΔT of regeneration torque is increased as the rate of change of the rotational speed N₁₈ of the power transmitting member 18 coupled to the differential unit 11 is larger, namely, as the rotational speed N₁₈ changes more rapidly. Therefore, the rotational speed N₁₈ of the transmitting member 18 can be easily raised, and shift shock is reduced.

According to the present embodiment, the regeneration torque is gradually increased to be brought back into the condition prior to reduction of the regeneration torque in a terminal period of shifting, so that a rapid change in the torque produced by the second motor M2 can be prevented at the end of the shifting.

According to the present embodiment, the amount of reduction of the regeneration torque is increased in accordance with the amount of change of the rotational speed N_{E} of the engine 8, so that the engine speed N_{E} can be quickly raised, for example, during manual downshifting, and the driver can feel an enhanced sense of deceleration due to the increase of the engine speed N_{E}.

According to the present embodiment, the differential unit 11 and the automatic transmission 20 may constitute a continuously variable transmission, which is able to smoothly change driving torque. The differential unit 11 may operate as an electric continuously variable transmission in which the speed ratio is continuously changed, or may operate as a stepped shifting transmission having two or more gear positions, in which the speed ratio is changed in steps.

According to the present embodiment, the differential unit 11 that functions as an electric continuously variable transmission and the automatic transmission 20 having two or more gear positions constitute a continuously variable transmission, which can smoothly change driving torque. Also, where the speed ratio of the differential unit 11 is controlled to be kept constant, the differential unit 11 and the automatic transmission 20 having two or more gear positions cooperate to provide a system equivalent to a stepped shifting type transmission having two or more gear positions. In this case, the total speed ratio of the vehicular drive system is changed in steps so that desired driving torque can be quickly obtained.

While one exemplary embodiment of the invention has been described in detail with reference to the drawings, it is to be understood that the invention may be embodied otherwise.

In the illustrated embodiment, the amount of reduction ΔT of the regeneration torque is set so that it increases with the amount of change of the rotational speed N₁₈ of the power transmitting member 18. However, the amount of reduction ΔT of the regeneration torque is not necessarily increased with the amount of change of the rotational speed N₁₈, but may be changed according to other parameters. For example, the amount of reduction ΔT may be always held at a given value, or may increase in accordance with a relative value or difference between the current rotational speed N₁₈ and the target rotational speed to be achieved after shifting.

While the second motor M2 is directly coupled to the power transmitting member 18 in the illustrated embodiment, the position to which the second motor M2 is coupled is not limited to that of the embodiment, but may be coupled directly or indirectly via a transmission, or the like, to a suitable point on the power transmission path between the differential unit 11 and the driving wheels 34.

In the illustrated embodiment, the differential unit 11 functions as an electric continuously variable transmission whose gear ratio or speed ratio γ0 is continuously varied from the minimum value γ0min to the maximum value γ0max. However, the invention may also be applied to a system that does not continuously change the speed ratio γ0 of the differential unit 11, but changes the speed ratio γ0 in steps, i.e., among two or more speeds, utilizing the differential operation thereof.

In the illustrated embodiment, the differential unit 11 may be provided with a differential motion restricting device disposed in the power distribution mechanism 16, and its differential operation or function may be restricted so that the differential unit 11 operates as a stepped shifting transmission having at least two forward gear positions.

In the power distributing mechanism 16 of the illustrated embodiment, the first carrier CA1 is coupled to the engine 8, and the first sun gear S1 is coupled to the first motor M1, while the first ring gear R1 is coupled to the power transmitting member 18. It is, however, to be understood that the coupling relationships among these elements are not necessarily limited to those of the illustrated embodiment, but each of the engine 8, first motor M1 and the transmitting member 18 may be coupled to any one of the three elements CA1, S1, R1 of the first planetary gear unit 24.

While the engine 8 is directly coupled to the input shaft 14 in the illustrated embodiment, the engine 8 and the input shaft 14 may be operatively coupled to each other via a gear or gears, a belt, or the like, and need not be mounted on a common axis.

While the first motor M1 and the second motor M2 are disposed coaxially on the input shaft 14, and the first motor M1 is coupled to the first sun gear S1 while the second motor M2 is coupled to the power transmitting member 18 in the illustrated embodiment, the first and second motors M1 and M2 are not necessarily positioned in this manner. For example, the first motor M1 may be operatively coupled to the first sun gear S1 via a gear(s), a belt, a reduction gear(s), or the like, and the second motor M2 may be operatively coupled to the transmitting member 18 via a gear(s), a belt, a reduction gear(s), or the like.

Also, the first clutch C1 and the second clutch C2, which are hydraulic friction devices in the illustrated embodiment, may consist of magnetic power type, electromagnetic, or mechanical coupling devices, such as a powder (magnetic power) clutch, an electromagnetic clutch, or a dog clutch. Where the first and second clutches C1 and C2 are electromagnetic clutches, for example, the hydraulic control circuit 70, which includes valves for switching oil paths, is replaced with a switching device for switching a command signal circuit that sends electric command signals to electromagnetic clutches, or an electromagnetic switching device, for example.

While the automatic transmission 20 is coupled in series to the differential unit 11 via the power transmitting member 18 in the illustrated embodiment, a countershaft that extends in parallel with the input shaft 14 may be provided, and the automatic transmission 20 may be coaxially mounted on the countershaft. In this case, the differential unit 11 and the automatic transmission 20 are coupled to each other via a set of power transmitting members in the form of a pair of counter gears, sprockets and a chain, in place of the transmitting member 18, such that power can be transmitted between the differential unit 11 and the automatic transmission 20.

The power distributing mechanism 16 serving as the differential mechanism of the illustrated embodiment may be in the form of a differential gear unit having a pinion that is rotated or driven by the engine, and a pair of bevel gears that mesh with the pinion and are operatively coupled to the first motor M1 and the power transmitting member 18 (second motor M2).

While the power distributing mechanism 16 of the illustrated embodiment consists of a single planetary gear set, it may consist of two or more planetary gear sets, and may function as a transmission having three or more gear positions when it is in a non-differential state (stepped shift mode). Also, each of the planetary gear sets is not limited to that of a single pinion type, but may be a double-pinion type planetary gear set.

While the shifting device 50 of the illustrated embodiment is provided with the shift lever 52 that is operated so as to select one from a plurality of shift positions P_{SH}, the shift lever 52 may be replaced with a switch, such as a push-button type switch or a slide type switch, with which one of the shift positions P_{SH} can be selected, or a device that can switch among the shift positions P_{SH} in response to the voice of the driver, without depending on a manual operation, or a device that is operated by foot for switching among the shift positions P_{SH}. While the shift ranges are set when the shift lever 52 is operated to the "M" position in the illustrated embodiment, the shift ranges may be set by setting the gear positions, namely, the highest-speed gear position in each of the shift ranges may be set as the gear position. In this case, shifting of the automatic transmission 20 is carried out by switching the gear positions. For example, when the shift lever 52 placed in the "M" position is manually operated to the upshift position "+" or the downshift position "-", any one of the 1^{st}-speed gear position to the 4^{th}-speed gear position is established in the automatic transmission 20 in response to the operation of the shift lever 52.

It is to be understood that the invention may be embodied with various other changes or improvements, based on the knowledge of one skilled in the art, the scope of protection being defined by the claims.

## Claims

1. A control system of a vehicular drive system including an engine (8), an electric differential unit (11) in which operating state of first electric motor (M1) coupled in a power transmittable manner to rotary elements of a differential mechanism (16) is controlled so that a differential state between a rotational speed of an input shaft (14) coupled in a power transmittable manner to the engine (8) and a rotational speed of an output shaft (18) is controlled, and a second electric motor (M2) and a shifting unit (20) that are coupled to a power transmission path from the electric differential unit to a driving wheel, **characterized by** comprising
regeneration torque reducing means (86) for reducing regeneration torque of the second electric motor when the shifting unit (20) is in an inertia phase during coast downshifting.

2. The control system according to claim 1, wherein
the regeneration torque reducing means (86) makes an amount of reduction of the regeneration torque variable depending on a selected shift mode of the shifting unit (20).

3. The control system according to claim 2, wherein:
a shifting device (50) is provided which is manually operated by a driver to permit selection of a gear position of the shifting unit in a manual shift mode; and
the regeneration torque reducing means (86) decreases the amount of reduction of the regeneration torque during coast downshifting in the manual shift mode, as compared with that during coast downshifting in an automatic shift mode in which the shifting unit is automatically shifted down.

4. The control system according to any one of claims 1 to 3, wherein
the regeneration torque reducing means (86) increases the amount of reduction of the regeneration torque as a rate of change of the rotational speed of the output shaft of the electric differential unit increases.

5. The control system according to any one of claims 1 to 4, wherein
the regeneration torque reducing means (86) gradually increases the regeneration torque in a terminal period of shifting, so as to resume a condition prior to reduction of the regeneration torque.

6. The control system according to any one of claims 1 to 5, wherein
the regeneration torque reducing means (86) increases the amount of reduction of the regeneration torque in accordance with an amount of change of a rotational speed of the engine.

7. The control system according to any one of claims 1 to 6, wherein
the operating states of the first and second electric motors (M1, M2) are controlled so that the electric differential unit (11) operates as a continuously variable transmission.

8. The control system according to any one of claims 1 to 6, wherein
the shifting unit (20) is an automatic transmission having a plurality of gear positions.

9. The control system according to any one of claims 1 to 8, wherein
the second electric motor is connected to the output shaft.

10. A method of controlling a vehicular drive system, **characterized by** comprising the steps of:
determining whether the drive system is being shifted down during coasting of the vehicle (S1);
determining whether the vehicle is in a regenerative running condition (S2);
determining whether a shifting condition is an inertia phase (S3); and
reducing regeneration torque of an electric motor of an electric differential unit provided in a power transmission path from an engine to a driving wheel when it is determined that coast downshift is carried out, the vehicle is in the regenerative running condition, and the shifting condition is the inertia phase (S4), the electric motor being connected to an output shaft of the electric differential unit.

## Patentansprüche

1. Steuerungssystem für ein Fahrzeug-Antriebssystem, das einen Motor (8), eine elektrische Differentialeinheit (11), in der ein Betriebszustand des ersten Elektromotors (M 1), der leistungsübertragbar mit Drehelementen eines Differentialmechanismus (16) gekoppelt ist, so gesteuert wird, dass ein Differentialzustand zwischen einer Drehzahl einer Eingangswelle (14), die leistungsübertragbar mit dem Motor (8) gekoppelt ist, und einer Drehzahl einer Ausgangswelle (18) gesteuert wird, und einen zweiten Elektromotor (M2) und eine Schalteinheit (20) beinhaltet, die mit einem Leistungsübertragungsweg von der elektrischen Differentialeinheit mit einem Antriebsrad gekoppelt ist, **dadurch gekennzeichnet, dass** es aufweist
eine Regenerationsdrehmoment-Reduktionseinrichtung (86) zum Reduzieren eines Regenerationsdrehmoments des zweiten Elektromotors, wenn die Schalteinheit (20) sich während des Zurückschaltens im Leerlauf in einer Trägheitsphase befindet.

2. Steuerungssystem nach Anspruch 1, wobei
die Regenerationsdrehmoment-Reduktionseinrichtung (86) einen Reduktionsbetrag des Regenerationsdrehmoments abhängig von einem ausgewählten Schaltmodus der Schalteinheit (20) variabel macht.

3. Steuerungssystem nach Anspruch 2, wobei:
eine Schaltvorrichtung (50) vorgesehen ist, die durch einen Fahrer manuell betätigt wird, um eine Auswahl einer Gangposition der Schalteinheit in einem manuellen Schaltmodus zu erlauben; und
die Regenerationsdrehmoment-Reduktionseinrichtung (86) den Reduktionsbetrag des Regenerationsdrehmoments während des Zurückschaltens im Leerlauf im manuellen Schaltmodus verglichen mit jenem während des Leerlauf-Zurückschaltens im automatischen Schaltmodus, in dem die Schalteinheit automatisch zurückgeschaltet wird, verringert.

4. Steuerungssystem nach einem der Ansprüche 1 bis 3, wobei
die Regenerationsdrehmoment-Reduktionseinrichtung (86) den Reduktionsbetrag des Regenerationsdrehmoments erhöht, wenn eine Veränderungsrate der Drehzahl der Ausgangswelle der elektrischen Differentialeinheit zunimmt.

5. Steuerungssystem nach einem der Ansprüche 1 bis 4, wobei
die Regenerationsdrehmoments-Reduktionseinrichtung (86) das Regenerationsdrehmoment in einer Endphase des Schaltens allmählich erhöht, um eine Bedingung vor der Reduktion des Regenerationsmoments wiederherzustellen.

6. Steuerungssystem nach einem der Ansprüche 1 bis 5, wobei
die Regenerationsdrehmoment-Reduktionseinrichtung (86) die Reduktionsmenge des Regenerationsdrehmoments gemäß einem Veränderungsbetrag der Rotationsdrehzahl des Motors erhöht.

7. Steuerungssystem nach einem der Ansprüche 1 bis 6, wobei die Betriebszustände des ersten und des zweien Elektromotors (M1, M2) so gesteuert werden, dass die elektrische Differentialeinheit (11) als ein stufenloses Getriebe arbeitet.

8. Steuerungssystem nach einem der Ansprüche 1 bis 6, wobei
die Schalteinheit (20) ein Automatikgetriebe mit einer Mehrzahl von Gangpositionen ist.

9. Steuerungssystem nach einem der Ansprüche 1 bis 8, wobei der zweite Elektromotor mit der Ausgangswelle verbunden ist.

10. Verfahren zum Steuern eines Fahrzeug-Antriebssystems, **dadurch gekennzeichnet, dass** es folgende Schritte beinhaltet:
Bestimmen, ob das Antriebssystem während des Leerlaufbetriebs des Fahrzeugs zurückgeschaltet wird (S1);
Bestimmen, ob das Fahrzeug sich in einer regenerativen Laufbedingung befindet (S2);
Bestimmen, ob eine Schaltbedingung sich in einer Trägheitsphase befindet (S3); und
Reduzieren eines Reduktionsregenerationsdrehmoment eines Elektromotors einer elektrischen Differentialeinheit, die in einem Leistungsübertragungsweg von einem Motor zu einem Antriebsrad angeordnet ist, wenn bestimmt wird, dass ein Leerlauf-Zurückschaltvorgang ausgeführt wird, das Fahrzeug sich in der regenerativen Fahrbedingung befindet, und die Schaltbedingung sich in der Trägheitsphase befindet (S4), wobei der Elektromotor mit einer Ausgangswelle der elektrischen Differentialeinheit verbunden ist.

## Revendications

1. Système de contrôle d'un système de commande véhiculaire comprenant un moteur (8), une unité différentielle électrique (11) dans laquelle un état opérationnel d'un premier moteur électrique (M1) couplé de manière à pouvoir transmettre une puissance aux éléments rotatifs d'un mécanisme différentiel (16) est contrôlé de sorte qu'un état différentiel entre une vitesse de rotation d'un arbre d'entrée (14) couplé de manière à pouvoir transmettre une puissance au moteur (8) et une vitesse de rotation d'un arbre de sortie (18) est contrôlé, et un deuxième moteur électrique (M2) et une unité de changement de vitesse (20) qui sont couplés à un trajet de transmission de puissance de l'unité différentielle électrique à une roue motrice, **caractérisé en ce qu'**il comprend
des moyens de réduction de couple de régénération (86) pour réduire le couple de régénération du deuxième moteur électrique lorsque l'unité de changement de vitesse (20) est dans une phase d'inertie lors d'une rétrogradation dans une côte.

2. Système de contrôle selon la revendication 1, dans lequel
les moyens de réduction de couple de régénération (86) rendent une quantité de réduction du couple de régénération variable en fonction d'un mode de changement de vitesse choisi de l'unité de changement de vitesse (20).

3. Système de contrôle selon la revendication 2, dans lequel :
un dispositif de changement de vitesse (50) est prévu qui est actionné manuellement par un conducteur pour permettre une sélection d'une position de vitesse de l'unité de changement de vitesse dans un mode de changement de vitesse manuel ; et
les moyens de réduction de couple de régénération (86) diminuent la quantité de réduction du couple de régénération lors de la rétrogradation dans une côte dans le mode de changement de vitesse manuel, par rapport à la rétrogradation dans une côte dans un mode de changement de vitesse automatique dans lequel l'unité de changement de vitesse rétrograde automatiquement.

4. Système de contrôle selon l'une quelconque des revendications 1 à 3, dans lequel les moyens de réduction du couple de régénération (86) augmentent la quantité de la réduction du couple de régénération dès qu'un taux de changement de la vitesse de rotation de l'arbre de sortie de l'unité différentielle électrique augmente.

5. Système de contrôle selon l'une quelconque des revendications 1 à 4, dans lequel
les moyens de réduction du couple de régénération (86) augmentent progressivement le couple de régénération dans une période terminale de changement de vitesse, afin de reprendre un état avant la réduction du couple de régénération.

6. Système de contrôle selon l'une quelconque des revendications 1 à 5, dans lequel
les moyens de réduction du couple de régénération (86) augmentent la quantité de la réduction du couple de régénération en fonction d'une quantité de changement d'une vitesse de rotation du moteur.

7. Système de contrôle selon l'une quelconque des revendications 1 à 6, dans lequel
les états opérationnels des premier et deuxième moteurs électriques (M1, M2) sont contrôlés de telle sorte que l'unité différentielle électrique (11) fonctionne comme une transmission variable en continu.

8. Système de contrôle selon l'une quelconque des revendications 1 à 6, dans lequel
l'unité de changement de vitesse (20) est une transmission automatique ayant une pluralité de positions de vitesses.

9. Système de contrôle selon l'une quelconque des revendications 1 à 8, dans lequel le deuxième moteur électrique est raccordé à l'arbre de sortie.

10. Procédé de contrôle d'un système de commande véhiculaire, **caractérisé en ce qu'**il comprend les étapes consistant à :
déterminer si le système de commande est rétrogradé lorsque le véhicule (S1) monte une côte ;
déterminer si le véhicule est dans un état de fonctionnement régénératif (S2) ;
déterminer si un état de changement de vitesse est une phase d'inertie (S3) ; et
réduire le couple de régénération d'un moteur électrique d'une unité différentielle électrique dans un trajet de transmission de puissance d'un moteur à une roue motrice lorsqu'il est déterminé qu'une rétrogradation dans une côte est effectuée, que le véhicule est dans l'état de fonctionnement régénératif, et que l'état de changement de vitesse est la phase d'inertie (S4), le moteur électrique étant raccordé à un arbre de sortie de l'unité différentielle électrique.
